# EUROPEAN PATENT APPLICATION

(11) **EP 0 881 049 A1**
(43) Date of publication of application: **02.12.1998**
(21) Application number: 97830253.7
(22) Date of filing: 28.05.1997
(51) Int. Cl.: B29B 9/04, B26F 3/00

(54) **A device for working sheet material**

(71) Applicant: STEEL BELT SYSTEMS S.r.l., I-20146 Milano (IT)
(72) Inventor: Calamara, Giovanni, 98124 Messina (IT)
(74) Representative: Sutto, Luca

(57) **Abstract**

A device for working sheet materials is disclosed which comprises a feeding station (2) of a predetermined sheet material (7), a discharge station (8) for the sheet material (7), a conveyor belt (3) to move the sheet material from the feeding station (2) to the discharge station (8) and a pair of scoring rollers (13, 15) interposed between the feeding station and discharge station and capable of making, on at least one side of the sheet material (7), a series of scores (11) defining a plurality of fragile elements (12) of regular conformation on the sheet material itself.

## Description

The present invention relates to a device for working sheet material.

In particular, the invention relates to a device intended for working sheet material consisting of plastic resins, both of the thermosetting type and the thermoplastic type, or of compounds of plastic resins added with pigments, metals or still other materials, in order to give rise to products in the form of powders, pellets, flakes and the like.

It is known that, in order to produce plastic resins or compounds based on plastic resins , for example in the form of powder, pellets, flakes or at all events particles of predetermined sizes, plants are presently used that upstream comprise a mixing device intended to carry out homogenization and mixing of the resin and dispersion therein of possible additives such as pigments, synthetic materials, powdered titanium or others. Usually operating downstream of the mixer are extruder or calendering stations arranged to convert the resin-based mixture into a sheet material that is then sent to a conveyor device. The latter, consisting for example of a conventional conveyor belt, carries the material from a feeding station to a discharge station also carrying out a heat treatment operation on the sheet material itself. For example, the conveyor belt is likely to be provided with cooling means enabling progressive hardening of the sheet material which, when it has reached the discharge station, enters a crushing station typically consisting of a rotating stirrer cooperating with perimetric comb-like stators, for reduction of the sheet material into flakes of different sizes.

Subsequently, flakes collected downstream of the crushing device are sent to a powdering unit or other unit carrying out reduction of the flakes to the desired particle sizes.

Although plants of the above described type are widely used, they have shown many drawbacks in particular due to the fact that use of a crushing device for reducing the sheet material into flakes is required. Actually, not only this device is a sure source of noise giving rise, as a result, to sound pollution and making it necessary to carry out appropriate insulations, but it also causes spreading of powders, so that sucking and filtering systems need to be installed and, in any case, the environment surrounding the crushing device is inevitably unhealthy for those operators that may be assigned to this task.

In addition to the above, it is to note that the crushing device creates flakes of uneven sizes and consequently yield and operating efficiency of the subsequent powdering unit cannot be optimal.

Furthermore, due to the presence of the crushing device, the whole line becomes much more complicated and inconveniences occur both in terms of intrinsic costs and in terms of safety, acoustic insulation and air-treatment devices that must necessarily be associated with the crushing device.

Finally, it is also important to note that the crushing unit, by acting on the sheet material already in a rigid state, highlights many problems in terms of wear and servicing costs.

Under this situation, it is a fundamental object of the present invention to substantially eliminate all the above mentioned drawbacks by providing a device for working sheet material which, due to its particular structure, is capable of reducing the sheet material into flakes of predetermined sizes in an autonomous manner, without the use of any crushing unit being required.

More particularly, it is an object of the invention to provide a device capable of carrying out a reduction of the sheet material into a plurality of elements of even sizes without problems of sound and air pollution being involved and at high production rates.

The foregoing and further objects, that will become more apparent in the progress of the following description are substantially achieved by a device for working sheet material according to that which is set forth in the appended claims.

Further features and advantages will be best understood from the detailed description of a preferred but non-exclusive embodiment of a device for working sheet material in accordance with the present invention which is taken hereinafter, by way of non-limiting example, with reference to the accompanying drawings, in which:

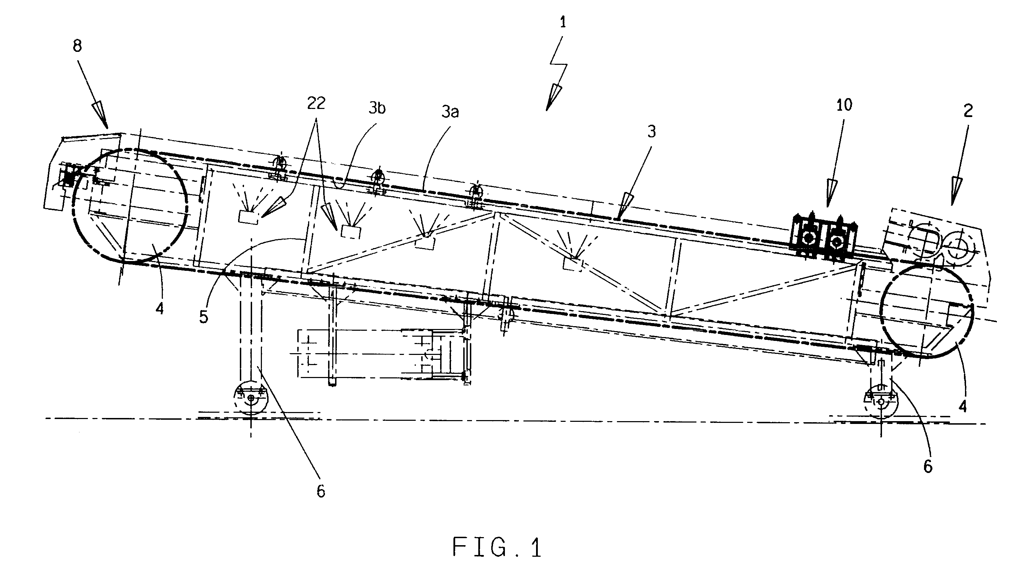

- Fig. 1 is a diagrammatic side view of the device in accordance with the invention;

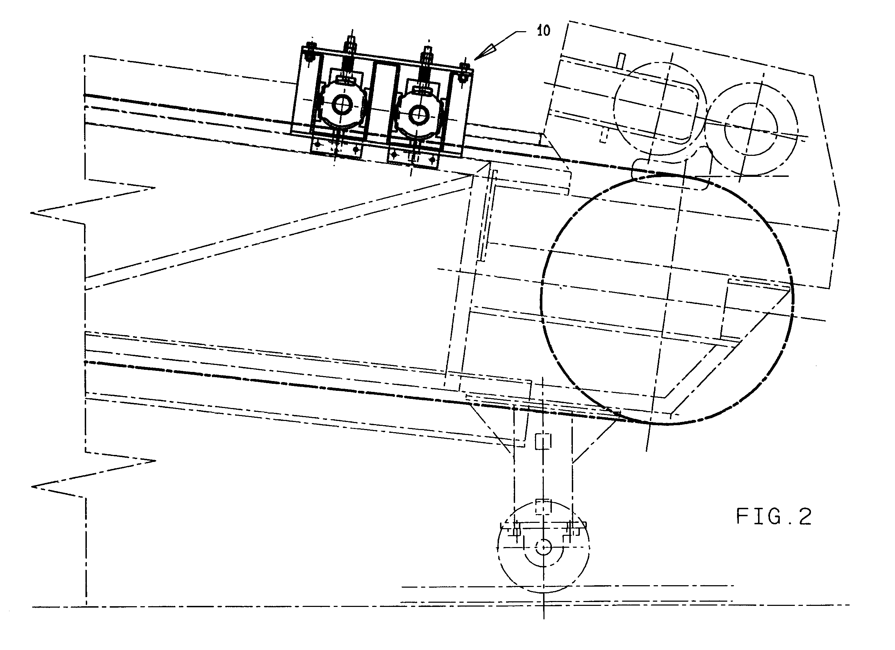

- Fig. 2 shows a detail of a portion of the inventive device to an enlarged scale;

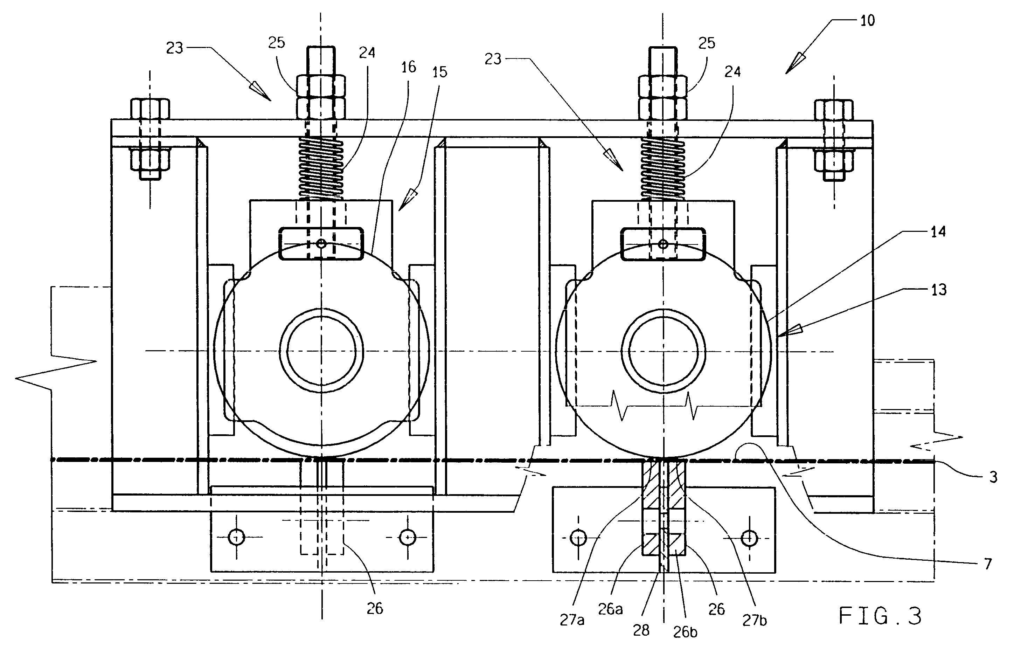

- Fig. 3 shows a detail of Figs. 1 and 2 relating to scoring rollers being part of the device in question too, to a still more enlarged scale;
- Fig. 4 is a top view of the representation shown in Fig. 2;
- Fig. 5 is a diagrammatic top view of a portion of a sheet material downstream of the scoring rollers,
- Fig. 6 is a transverse section broken at the centre line of one of the scoring rollers shown in Fig. 3;
- Fig. 7 is a diagrammatic cross-sectional view of a tubular sleeve externally carried by each of the scoring rollers; and
- Fig. 7a is an enlarged view of a detail shown in Fig. 7.

With reference to the accompanying drawings, a device for working sheet material in accordance with the present invention has been generally identified by reference numeral 1.

It is to point out that device 1 is generally used in plants for working thermoplastic or thermosetting resins, as well as compounds of said resins, to produce powders or semifinished products of reduced particle size for example, or semifinished products in the form of flakes adapted to final applications such as painting or others. In this type of plants, the device 1 is usually located downstream of a mixing station (consisting of single- or double-screw extruders, for example), and a rolling station consisting of a calendering system for example.

Practically, the device 1 progressively receives a sheet material 7 usually in a plastic/pasty state and carries out transport and heat treatment of it.

For the purpose, the device 1 conventionally comprises a feeding station 2 sending the sheet material to movement means 3. This means may consist of a conveyor belt wrapped over pulleys denoted by 4 in an endless configuration or a conveyor drum carrying out movement of the sheet material between a feeding station and a discharge station spaced apart at an angle from each other close to the side surface of said drum. It is to note that for this type of applications the conveyor belt is usually made of high tensile and high-surface-hardness steel. In the example shown it is to point out that pulleys 4 are supported by a fixed framework 5 mounted for example on a carriage structure 6 arranged to enable movement of the device 1.

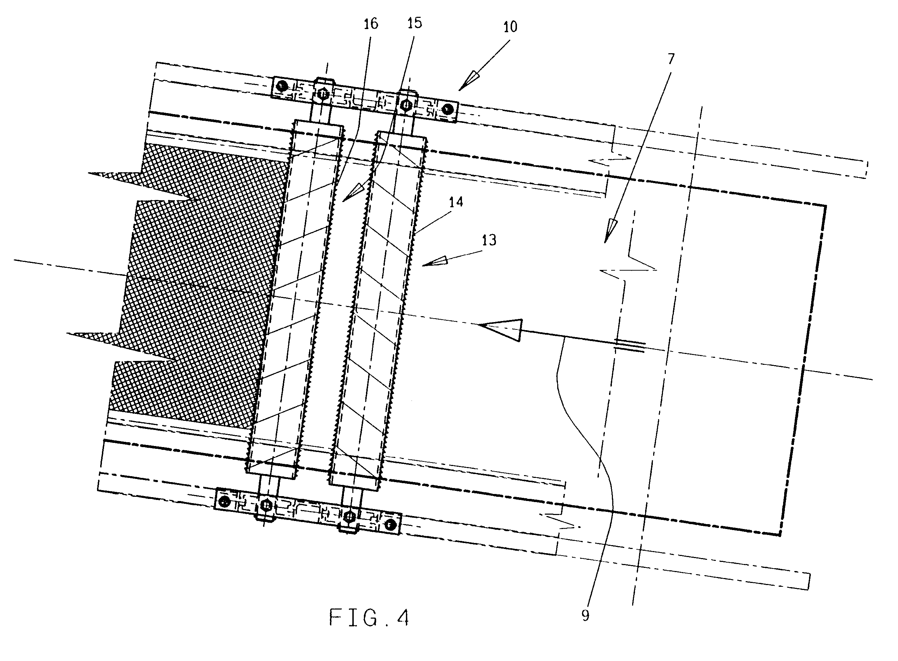

Moreover, the conveyor belt 3 carries out movement of the sheet material 7 from the feeding station 2 to a discharge station 8 according to a predetermined rectilinear movement direction denoted, by way of example, by arrow 9 in figure 4.

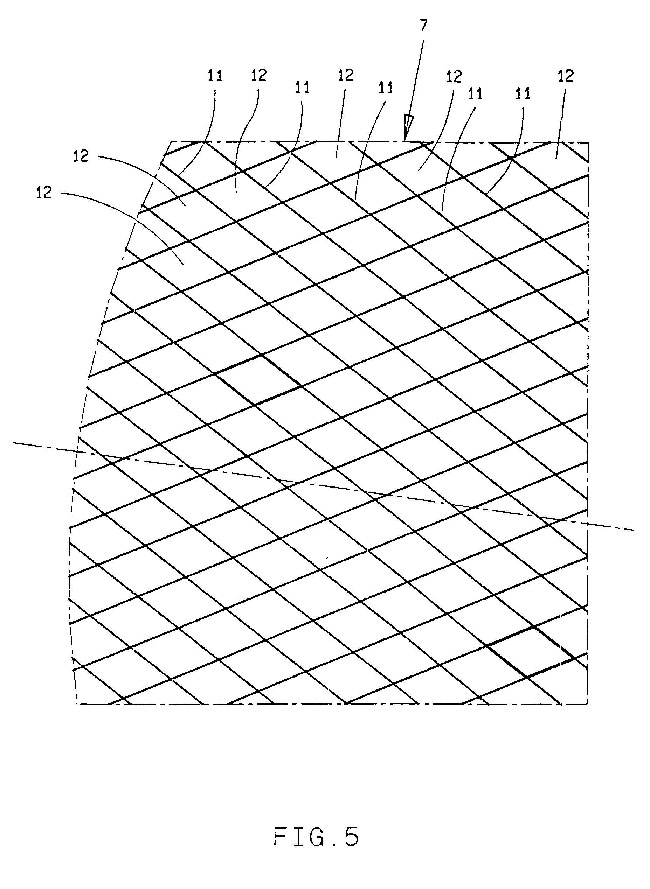

In an original manner, the device 1 comprises a scoring unit 10, located at a belt stretch between the feeding station 2 and discharge station 8, capable of operating at least on one side (in this case the upper one) of the sheet material 7 to make a series of scores 11 defining a plurality of facilitated-fracture or frangible elements 12 of substantially regular conformation on said sheet material (see Figs. 4 and 5). In greater detail, the scoring unit 10 operates on the upper stretch 3a of the conveyor belt 3 and in close proximity with, preferably immediately downstream of the feeding station 2, so as to be able to operate on the sheet material 7 still in a plastic state. In this way, scores 11 can be produced by easily penetrating into the sheet material 7 and without too much wear of the active surfaces of the scoring unit itself.

Advantageously, the scoring unit 10 comprises at least one first scoring roller 13 having an active surface intended for contact with the sheet material 7, provided with shaped ridges 14a to define said series of scores 11. Preferably, a second scoring roller 15 is provided which is disposed in side by side relation with the first roller 13 and cooperates with it; said second roller too has an active surface 16 intended for contact with the sheet material to be worked and provided with shaped ridges 16a to define said score series 11 in cooperation with the first roller.

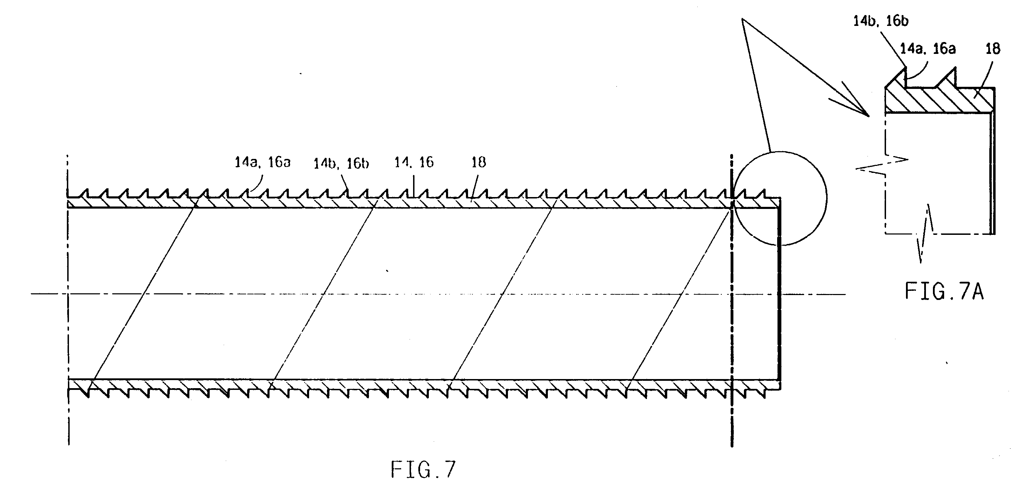

Practically, if two rollers 13, 15 are provided, each of said rollers is positioned transversely to the feed direction of the sheet material defined by arrow 9 and has ridges 14a, 16a extending in a substantially helical course along the active surface of the rollers themselves (see Fig. 7). It is to note that ridges 14a located on the active surface 14 of the first roller 13 extend according to a helix having an opposite sloping relative to the helix defined by ridges 16a present on the active surface 16 of the second scoring roller 15. In this manner, the two scoring rollers preferably engaged parallelly to each other and perpendicularly to the feed direction of the sheet material give rise to a series of scores on said material, thereby continuously defining a plurality of fragile or facilitated-fracture elements 12 of quadrangular conformation. Shown by way of example in Figs. 4 and 5 are fragile elements having a rhombus-shaped conformation. Clearly, this type of conformation is obtained by disposing the ridges on each roller according to a cylindrical helix course of constant pitch and an appropriate respective sloping of each helix.

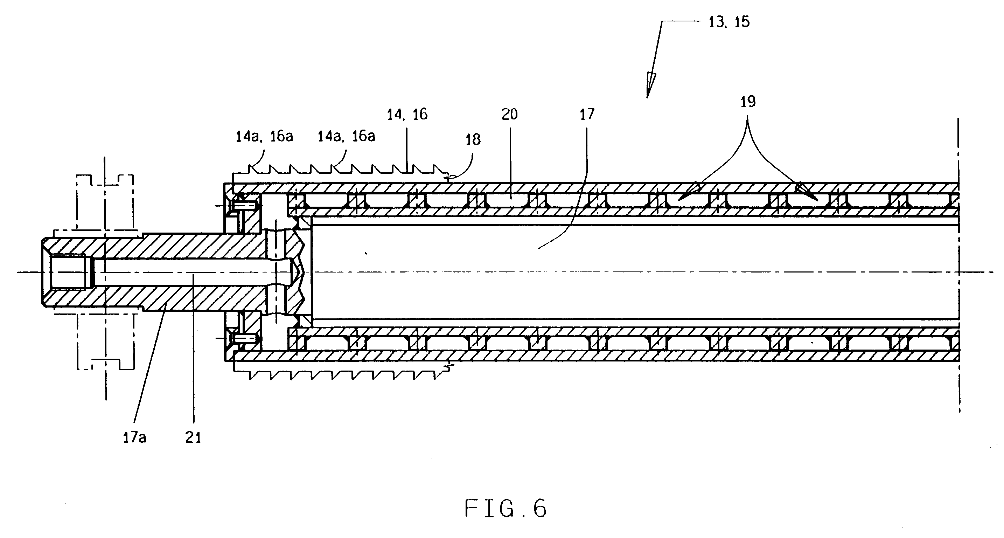

Since, as mentioned, the scoring unit 10 is placed close to the feeding station and therefore works the material in a plastic state, it is important to ensure an easy disengagement of ridges from the sheet material. For this reason, each ridge has been shaped according to a profile that, seen in a transverse section, is in the form of a wedge (see Figs. 7 and 7a). In addition, it is to note that each scoring roller 13, 15 is actually formed of a central rotating shaft 17 (see Fig. 6) on which a tubular sleeve 18 is engaged in a removable manner, said tubular sleeve defining the active surface, i.e. the shaped ridges of the roller itself. This tubular sleeve is preferably made of bronze, aluminium, Teflon-reinforced steel and at all events of materials which are at least surface-treated so as to reduce adhesion to the sheet material to the most and have a lower hardness than that of the material of which the conveyor belt is made (usually high tensile steel).

The last-mentioned feature enables damages to be avoided to said surface, in case of accidental interference between the ridge ends 14b, 16b and the conveyor belt surface. Actually, it is to note that possible wear to the ridges of each roller does not give rise to important drawbacks in that, on the one hand, the tubular sleeve, as said, can be replaced and, on the other hand, a very precise working in making scores defining the fragile elements 12 is not required.

It is also to note that at each scoring roller 13, 15 and, more particularly, between the central shaft 17 and tubular sleeve 18, cooling means 19 formed of at least one chamber 20 for fluid circulation is defined. More particularly, the central shaft 17 has an attachment portion 17a in which a channel 21 is coaxially formed which enables admission of a cooling fluid to chamber 20 which is exactly interposed between the tubular sleeve 18 and the central shaft 17.

Cooling means 22 may be also provided in association with the conveyor belt 3 and this means usually consists of sprayers active on a surface 3b of the conveyor belt 3 opposite that on which the sheet material rests. It is pointed out that, advantageously, the cooling means 19 associated with the scoring rollers 13, 15 is adapted to keep the active surfaces 14, 16 of said rollers to a relatively low temperature and preferably about 4-7°C, so as to promote separation of the sheet material.

In a different way, the cooling means 22 associated with the conveyor belt 3 arranged to promote hardening of the sheet material, keeps the belt to a higher temperature than that at which the active surfaces operate on the scoring rollers, which temperature is usually equal to or higher than 15°C.

The difference of temperature between the active surfaces of each scoring roller and the sheet material is an important factor for preventing the occurrence of gluing phenomena between the sheet material and the shaped ridges 14a, 16a.

Referring again to the scoring rollers 13, 15, it is to note that each of them is linked, at least at one of its ends, preferably at both of them, to support means 23 enabling connection of said rollers to framework 5. The support means 23 of the scoring rollers 13, 15 is also provided with thrust means 24, either of the elastic type for example, as shown in the accompanying drawings, or of the fluid-operated, pneumatic, electromagnetic or still other types. It is fundamental to the thrust means 24 associated with the support means 23 that it should operate on the scoring rollers 15, 13 in such a manner as to cause a thrust of the latter towards the sheet material, so as to cause a predetermined contact pressure adapted to promote penetration of the ridges without on the other hand exerting too strong a rolling action on the sheet material itself, which could lead to an interference between ridges and belt.

The thrust means should be advantageously equipped with an adjustment system 25 so as to enable adjustment of the pressing action exerted by the roller on the sheet material. It is also important to note that at each scoring roller, on the opposite side relative to the conveyor belt, locator means 26 is provided which is arranged to define a steady support for the belt 3 at the area where the scoring action is carried out. For each roller 13, 15 the locator means 26 preferably comprises a first and a second rest elements 26a, 26b facing each other and mutually spaced apart so that on top they define sliding surfaces 27a, 27b for the belt and also define a relief slit 28 at the area where penetration of ridge 14a, 16a into the material to be worked occurs.

Preferably, the first and second rest elements, at least at the sliding surfaces 27a, 27b, are made of antifriction material in order to restrain the abrasive action exerted on belt 3.

Operation of a device in accordance with the invention, described above mainly as regards structure, is as follows.

The sheet material to be worked, be it a thermoplastic or a thermosetting resin or a compound, comes to the feeding station 2 and is continuously laid down at the upper stretch 3a of the conveyor belt 3. The sheet material moves on for a short length and then comes to the area where the scoring unit 10 operates. At this point, the first scoring roller 13 and second scoring roller 15 cause a series of notches or scores 11 on the sheet material that, given the particular arrangement of the ridges on each roller, define a plurality of fragile elements 12 of rhomboidal conformation. More precisely, the first roller 13 will give rise to a first plurality of scores disposed parallely to each other and inclined at a given angle to the feed direction of the belt, whereas the second roller 15 will give rise to a second plurality of scores which are disposed parallelly to each other as well and inclined at the same angle as those of the first series relative to the feed direction of the belt but oriented oppositely. During this step the cooling means 19 and the particular wedge-shaped conformation of ridges 16a, 14a enable said ridges to be easily drawn out of the sheet material still in a plastic state.

It is to point out that ridges 14a, 16a are such sized as to penetrate into the sheet material for an important portion of its thickness so that the different fragile elements 12 are exclusively connected by a thin material layer. Then the sheet material goes on towards the discharge or outlet station 8 and, while running between the inlet station 2 and the outlet station 8 it is progressively heat treated (cooled, for example) and, consequently, hardened. As the material has reached the outlet station, it undergoes an angular deviation and therefore the different fragile elements 12 are spontaneously separated from each other.

A conventional powdering device for example may be then arranged for operation downstream of the device 1, which powdering device will receive the different elements already separated from each other.

The invention achieves important advantages.

Firstly, it is important to note that, due to the presence of the scoring unit 10, elimination of the crushing device that conventionally operated in traditional apparatuses has been made possible. Elimination of this crushing device leads to important advantages such as an important reduction of the sound and air pollution which, as a result, will improve the work environment.

In addition, the scoring rollers 13, 15 operate at an area where the material is still in a plastic state i.e. easily deformable and therefore do not at all undergo the irreparable and quick wear to which the crushing device associated with traditional apparatuses was subjected.

It is also to note that the device 1 in accordance with the invention enables a plurality of elements of regular geometry and predetermined sizes to be obtained from the sheet material, which in conclusion increases yield and reliability of possible powdering devices operating downstream of the device 1 to a substantial extent.

It should be also recognized that the device in question is very simple, which brings about sure economic advantages in terms of construction as well.

In addition, the particular conformation of the device in accordance with the invention enables operation at production rates much higher than those of traditional devices.

The invention is advantageous also in its most specific aspects.

Actually, it is to point out that the scoring rollers are provided with a tubular sleeve susceptible of replacement, which enables operation with great reliability and accuracy without heavy servicing costs, should replacements be required, due to wear to the ridges of each roller.

Also advantageous is the fact that the scoring rollers 13, 15 are provided with cooling means 10 to facilitate extraction of the ridges themselves during scoring of the sheet material. From this point of view, the importance of the materials of which the tubular sleeves of each scoring roller are made and the particular wedge-shaped geometry of the profile of each ridge is to be emphasized.

Finally, the thrust means 24 active on each scoring roller and provided with respective adjustments, enables the action carried out by each roller to be optimized depending on the thickness and features of the sheet material on which the roller is designed to work.

## Claims

1. A device for working sheet materials comprising:
- a feeding station (2) for supplying a predetermined amount of sheet material (7);
- a discharge or outlet station (8) for said sheet material (7); and
- means (3) for moving or handling the sheet material from the feed station (2) to the discharge station (8), characterized in that it comprises a scoring unit (10) operatively interposed between the feeding station and discharge station, capable of carrying out, on at least one side of said sheet material (7), a series of scores (11) defining a plurality of fragile or facilitated-fracture elements (12) of substantially regular conformation on the sheet material itself.

2. A device as claimed in claim 1, characterized in that said scoring unit (10) comprises at least one first scoring roller (13) provided with an active surface (14) intended to get in contact with the sheet material (7) and equipped with shaped ridges (14a) in view of defining at least part of said score series (11).

3. A device as claimed in claim 2, characterized in that said scoring unit (10) comprises at least one second scoring roller (15) associated with said first scoring roller (13), also provided with an active surface (16) adapted for contact with the sheet material (7) and provided with shaped ridges (16a) to define said series of scores (11) in cooperation with ridges 14a belonging to the first roller 13.

4. A device as claimed in claims 2 or 3, characterized in that the sheet material handling means comprises a conveyor belt or, alternatively, a conveyor drum, said first and optionally second rollers (13, 15) being such disposed that their axes of rotation are transverse and preferably perpendicular to a feed direction (9) defined by the conveyor belt (3).

5. A device as claimed in claim 2, characterized in that the shaped ridges (14a) of the first scoring roller (13) extend in a substantially helical course along the active surface (14) of said first roller.

6. A device as claimed in claims 3 and 5, characterized in that the shaped ridges (16a) of the second scoring roller (15) extend along the active surface (16) of said second roller (15) in a helical course of opposite sloping relative to that of the helix defined by the ridges (14a) of the first roller (13) to define fragile elements (12) of quadrangular conformation.

7. A device as claimed in claim 1, characterized in that said scoring unit (10) is located close to the feeding station (2) to operate on the sheet material (7) still in a plastic state.

8. A device as claimed in claims 2 or 3, characterized in that each of said shaped ridges (14a, 16a) is in the form of a wedge to promote extraction of the sheet material (7).

9. A device as claimed in claims 2 or 3, characterized in that each scoring roller (13, 15) is comprised of:
- a central support shaft (17);
- a tubular sleeve (18) externally associated with the shaft (17) by removable engagement, said tubular sleeve defining the active surface (14, 16) of each roller (13, 15).

10. A device as claimed in claim 9, characterized in that provision is made for means (19) for cooling the active surface (14, 16) of each scoring roller (13, 15) and comprising a fluid-circulation cooling chamber (20) formed between the central shaft (17) and tubular sleeve (18).

11. A device as claimed in claims 2, 3 and 4, characterized in that said tubular sleeve (18) is made of a material of lower hardness that the surface hardness of the conveyor belt (3).

12. A device as claimed in claims 2 and 3, characterized in that it comprises support means (23) for each scoring roller (13, 15) operating at least close to one end of said scoring roller and preferably provided with thrust means (24) operatively associated with the support means and arranged to exert a predetermined contact pressure between the active surface of the scoring roller and the sheet material.

13. A device as claimed in claims 2 and 3, characterized in that it comprises locator means (26) operating at each scoring roller at an opposite position relative to said conveyor belt.

14. A device as claimed in claim 4, characterized in that it comprises cooling means active on said conveyor belt, preferably at an inner surface (3b) of said conveyor belt and opposite to the work surface (3a) turned towards the active surface of the rollers (13, 15) so as to cause a temperature of said sheet material not exceeding 15°C.
